# EUROPÄISCHE PATENTANMELDUNG

(11) **EP 3 016 270 A2**
(43) Veröffentlichungstag der Anmeldung: **04.05.2016**
(21) Anmeldenummer: 15401106.8
(22) Anmeldetag: 27.10.2015
(51) Int. Cl.: H02P 6/182

(54) **VERFAHREN UND SCHALTUNGSANORDNUNG ZUR LAGESTABILISIERUNG EINES ROTORS GEGENÜBER EINEM STATOR IN EINEM ELEKTROMOTOR**

(30) Priorität: 27.10.2014 DE 102014115607
(71) Anmelder: Trinamic Motion Control GmbH & Co. KG, 22769 Hamburg (DE)
(72) Erfinder: Larsson, Lars, 20249 Hamburg (DE); Dressler, Enrico, 22087 Hamburg (DE)
(74) Vertreter: Heun, Thomas

(57) **Zusammenfassung**

Es wird ein Verfahren und eine Schaltungsanordnung zur Ansteuerung eines Elektromotors beschrieben, wobei der Motor einen Rotor mit Rotormagneten (Mg) sowie mindestens eine erste und eine zweite Statorspule (S_{L}, S_{R}) aufweist, die unabhängig voneinander elektrisch ansteuerbar sind und mit denen von beiden Seiten der Rotationsebene des Rotors magnetische Kräfte senkrecht zu der Rotationsebene auf den Rotor ausgeübt werden können. Die Statorspulen (S_{L}, S_{R}) werden dabei durch Erhöhung bzw. Verminderung des in diese eingeprägten Spulenstroms so angesteuert, dass eine in zur Rotationsebene des Rotors senkrechter Richtung auf den Rotor einwirkende äußere Kraft kompensiert und damit der Gefahr einer Berührung zwischen Rotor und Stator entgegengewirkt wird.

## Beschreibung

Die Erfindung betrifft ein Verfahren und eine Schaltungsanordnung zur Ansteuerung eines Elektromotors, der einen Rotor sowie mindestens einen Stator mit einer ersten und einer zweiten Statorspule aufweist, die beiderseits der Rotationsebene des Rotors angeordnet sind und mit denen von beiden Seiten der Rotationsebene des Rotors magnetische Kräfte senkrecht zu der Rotationsebene auf den Rotor ausgeübt werden können.

Die Erfindung betrifft ferner einen Elektromotor, der zum Beispiel zum Antrieb eines Elektrofahrrades geeignet ist und bei dem der Rotor durch ein mit einer Mehrzahl von Permanentmagneten besetztes Laufrad des Fahrrades gebildet ist.

Aus der US 7,191,861 B2 und der US 5,788,007 A sind Elektrofahrräder bekannt, bei denen der Rotor des Motors durch ein Laufrad mit einer Anzahl von entlang des Umfangs des Laufrades angeordneten Permanentmagneten (Rotormagneten) gebildet ist, während ein im Wesentlichen U-förmiger, an dem Fahrradrahmen befestigter und sich über die Felge beidseitig der Permanentmagnete erstreckender Elektromagnet den Stator bildet.

Aus der US 2012/0262095 A1 ist ein System und ein Verfahren zur Steuerung der Breite eines Luftspaltes zwischen einem Rotor und einem Stator bekannt, bei dem die Breite des Luftspaltes erfasst, mit einem Schwellwert verglichen und bei Unterschreiten des Schwellwertes durch Ausüben einer Kraft zwischen Rotor und Stator vergrößert wird.

Um einen eingangs genannten Elektromotor möglichst energieeffizient betreiben zu können, werden möglichst kleine Luftspalte zwischen den beiden Seiten des Rotors und den jeweils dort liegenden Abschnitten des Stators angestrebt. Je kleiner diese Luftspalte sind, desto präziser und stabiler muss jedoch der Rotor gelagert sein, damit nicht die Gefahr besteht, dass der Rotor durch im Betrieb eventuell auftretende Axialkräfte (d.h. äußere Kräfte, die in einer zur Rotationsebene des Rotors senkrechten Richtung auf den Rotor einwirken) verschoben oder verkippt wird und dabei den Stator berührt.

Dies kann insbesondere bei der oben genannten Anwendung eines solchen Motors zum Antrieb eines Elektrofahrrades ein Problem darstellen, da die üblicherweise lösbare Befestigung des betreffenden Laufrades an der betreffenden Gabel, der relativ große radiale Abstand zwischen der Achse des Laufrades und den Rotormagneten sowie mögliche hohe Beanspruchungen senkrecht zur Rotationsebene des Laufrades zu einem nicht unerheblichen Spiel in der genannten Richtung führen können, so dass die beiden Luftspalte eine gewisse Mindestbreite aufweisen müssen, um eine Berührung zwischen Rotor und Stator sicher auszuschließen.

Eine allgemeine Aufgabe, die der Erfindung zugrunde liegt, besteht deshalb darin, nach einer Möglichkeit zu suchen, mit der dieses Problem zumindest weitgehend vermieden werden kann, d.h. mit der wesentlich kleinere Luftspalte zwischen Rotor und den beidseitig des Rotors liegenden Abschnitten des Stators als allgemein üblich realisiert werden können, ohne dass sich dadurch die Gefahr von insbesondere kurzzeitigen Berührungen zwischen Rotor und Stator wesentlich erhöht.

Gelöst wird diese Aufgabe mit einem Elektromotor nach Anspruch 9, der mit einem Verfahren gemäß Anspruch 1 und/oder einer Schaltungsanordnung gemäß Anspruch 5 angesteuert wird.

Die abhängigen Ansprüche haben beispielhafte Weiterbildungen des Verfahrens bzw. der Schaltungsanordnung bzw. des Elektromotors zum Inhalt.

Ein wesentliches Grundprinzip der Erfindung besteht darin, bei einem Motor der eingangs genannten Art zwei Statorspulen (Phasen) vorzusehen, die jeweils eine vorzugsweise auf einen Kern gewickelte Statorwicklung aufweisen. Die beiden Statorwicklungen können dabei entweder auf einen gemeinsamen, zum Beispiel U-förmigen Kern oder auf zwei getrennte Kerne gewickelt sein und bilden somit entweder einen Stator mit mindestens zwei Statorspulen oder zwei getrennte Statoren mit jeweils mindestens einer Statorspule.

Wesentlich ist, dass die (mindestens) zwei Statorspulen (d.h. die zwei Statorwicklungen) unabhängig voneinander angesteuert werden können (d.h. elektrisch voneinander getrennt sind) und beiderseits der Rotationsebene des Rotors angeordnet sind, so dass von beiden Seiten der Rotationsebene des Rotors magnetische Kräfte senkrecht zu der Rotationsebene auf den Rotor ausgeübt werden können.

Dies kann zum Beispiel dadurch erreicht werden, dass bei einem bekannten Motor mit einer Statorspule die Statorwicklung entweder elektrisch aufgetrennt oder eine zusätzliche Statorwicklung an dem Stator oder ein zweiter Stator mit einer Statorspule so angeordnet wird, dass diese beiderseits der Rotationsebene des Rotors liegen.

Vorzugsweise sind die beiden Statorspulen dabei entlang einer gemeinsamen geraden Linie angeordnet, die senkrecht zur Rotationsebene des Rotors verläuft. Insbesondere verläuft diese Linie auch durch an dem Rotor angeordnete Rotormagnete, so dass sich also bei Drehung des Motors die Rotormagnete zwischen den beiden Statorspulen hindurch bewegen.

Weiterhin wird während des Betriebes des Motors eine Veränderung der Breite derjenigen beiden Luftspalte in zur Rotationsebene des Rotors senkrechter Richtung vorzugsweise gemessen, die sich zwischen dem Rotor einerseits und den jeweils beiderseits von dessen Rotationsebene neben dem Rotor angeordneten Statorspulen andererseits befinden.

Somit kann also durch Erfassung einer Veränderung dieser Luftspaltbreiten eine Axialkraft erkannt und durch entsprechende Erhöhung und/oder Verminderung der Bestromung zumindest einer der beiden Statorspulen eine Verschiebung oder Verkippung des Rotors kompensiert oder zumindest vermindert werden.

Insbesondere in dem Fall, in dem die beiden Statorspulen entlang einer gemeinsamen geraden Linie angeordnet sind, die zumindest im Wesentlichen senkrecht zur Rotationsebene des Rotors verläuft, wird sich immer dann, wenn sich aufgrund der oben erläuterten Axialkräfte z.B. einer der beiden Luftspalte verkleinert, der gegenüberliegende andere Luftspalt gleichzeitig entsprechend vergrößern, so dass also ein Verschieben oder Verkippen des Rotors (beispielsweise eines Laufrades) durch Erfassung dieser gegenläufigen Veränderung der beiderseitigen Abstände zwischen Rotor und Statorspulen (Luftspaltbreiten) klar erkannt und von einer Annäherung des Rotors an, sowie einer Entfernung des Rotors von beiden Statorspulen infolge der Drehbewegung des Rotors unterschieden werden kann, da sich in diesem Fall die Abstände zwischen Rotor und Statorspulen in gleicher Weise verkleinern und wieder vergrößern.

Wenn sich dabei also z.B. einer der beiden Luftspalte verkleinert, so wird der Strom durch die an dieser Seite auf den Rotor einwirkende Statorspule vermindert und/oder der Strom durch die an der gegenüberliegenden anderen Seite auf den Rotor einwirkende Statorspule entsprechend erhöht und damit neben dem Vortrieb wiederum eine zentrierende Kraft auf den Rotor ausgeübt, um den genannten Axialkräften entgegenzuwirken (und diese zumindest im Wesentlichen zu kompensieren), so dass beide Luftspalte eine zumindest im Wesentlichen unveränderte Breite beibehalten.

Der Motor ist vorzugsweise ein bürstenloser Motor, bei dem die Rotormagnete Permanentmagnete sind. Das erfindungsgemäße Prinzip ist grundsätzlich jedoch auch bei einem Motor anwendbar, bei dem zwei unabhängig voneinander ansteuerbare Rotorspulen vorgesehen sind, die sich bei Drehung des Rotors zwischen seitlich angeordneten Statormagneten oder Statorspulen hindurch bewegen.

Zur Messung der Breite der beiden Luftspalte bzw. deren (gegenläufiger) Veränderung sind verschiedene Verfahren anwendbar. Es können bekannte Abstandssensoren eingesetzt werden, die aufgrund verschiedener physikalischer Prinzipien arbeiten. Besonders bevorzugt erfolgt die genannte Messung jedoch durch Erfassung der durch den Rotor in einer Sensorspule oder der betreffenden Statorspule gegeninduzierten Spannung (Gegen-EMK). Diese Spannung ist bekanntlich ein Maß für die Breite des Luftspaltes und wird umso größer, je kleiner dieser Luftspalt ist und umgekehrt.

Die Gegen-EMK kann also einerseits mittels Sensoren, wie z.B. Messspulen erfasst werden, die beiderseits der Rotationsebene des Rotors bevorzugt an den Statorspulen oder abseits davon so angeordnet sind, dass sie mit der Gegen-EMK der betreffenden antreibenden Statorspule in Phase sind, so dass transformatorische Überlagerungen von den Statorspulen auf die Messspulen vermieden werden.

Andererseits ist es auch möglich, die Statorspulen selbst zur Erfassung der Gegen-EMK zu verwenden, so dass also keine zusätzlichen Sensoren oder Messspulen erforderlich sind.

Somit kann also in besonders vorteilhafter Weise eine zur Kommutierung der Spulenströme erforderliche Erfassung der momentanen Drehstellung des Rotors durch Ermittlung der durch die Drehung des Rotors in den Statorspulen oder in Mess- bzw. Sensorspulen gegeninduzierten Spannung (Gegen-EMK) mit der erfindungsgemäßen Erfassung von Axialkräften kombiniert werden, und zwar insbesondere dann, wenn die beiden Statorspulen beiderseits der Rotationsebene des Rotors und entlang einer geraden Linie angeordnet sind, die zumindest im Wesentlichen senkrecht zur Rotationsebene des Rotors verläuft, so dass die Axialkräfte zu einer gegenläufigen Veränderung der beiden genannten Luftspaltbreiten und damit auch zu einer gegenläufigen Veränderung der Gegen-EMK in den beiden Stator- bzw. Mess- oder Sensorspulen führen.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: unterschiedliche Anordnungen von Rotor und Stator radial bzw. seitlich zueinander;
- Fig. 2: Anordnungen von einer bzw. zwei Statorspulen in Relation zu einem Rotormagneten eines Elektromotors;
- Fig. 3: eine schematische Darstellung einer erfindungsgemäßen Anordnung von zwei Statorspulen in Relation zu einem Rotormagneten;
- Fig. 4: ein Blockschaltbild einer erfindungsgemäßen elektronischen Steuereinheit für einen erfindungsgemäßen Elektromotor;
- Fig. 5: ein erstes Beispiel zur Bestimmung und Kompensation der Luftspaltbreiten;
- Fig. 6: ein zweites Beispiel zur Bestimmung und Kompensation der Luftspaltbreiten; und
- Fig. 7: ein drittes Beispiel zur Bestimmung und Kompensation der Luftspaltbreiten.

Grundsätzlich besteht die Möglichkeit, den Stator eines Elektromotors gegenüber dem Rotor so anzuordnen, dass der Stator entweder in radialer Richtung des Rotors oder in einer Richtung senkrecht zu dessen Rotationsebene von diesem beabstandet ist.

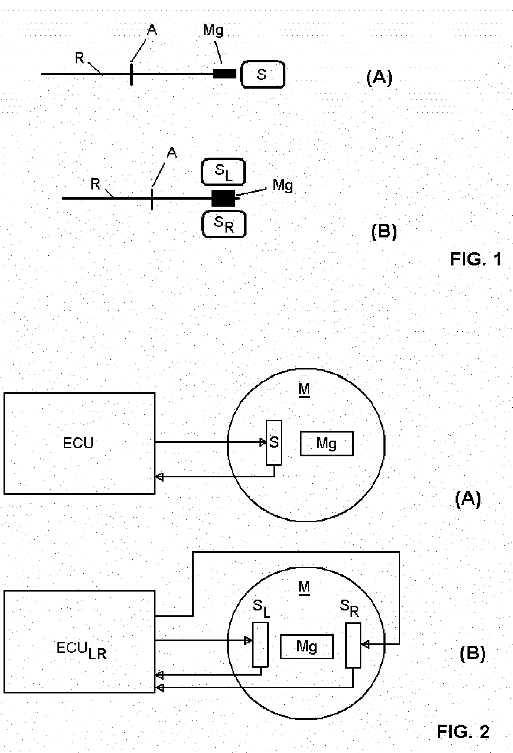

Dies sei anhand der schematischen Darstellung in Figur 1 näher erläutert. Im erstgenannten Fall gemäß Figur 1(A) wirken zwischen dem Rotor R mit Drehachse A und Rotormagneten Mg und dem in dazu radialer Richtung beabstandeten Stator mit Statorspule S neben den tangentialen Kräften, die den Antrieb bewirken, im Wesentlichen nur Kräfte in radialer Richtung. Wenn in diesem Fall der Rotor bzw. das betreffende Laufrad eines Elektrofahrrades durch die eingangs genannten äußeren Axialkräfte verkippt oder verschoben wird, so stellt dies im Allgemeinen kein Problem dar, da sich dadurch die Breite des Luftspaltes nicht wesentlich verändert und eine Berührung zwischen Rotormagnet Mg und Stator bzw. Statorspule S kaum möglich ist.

In dem in Figur 1(B) gezeigten Fall ist ein Stator mit zwei Statorspulen S_{L}, S_{R} (oder zwei Statoren mit jeweils einer Statorspule S_{L}, S_{R}, dies soll nachfolgend als synonym betrachtet werden) beidseitig der Rotationsebene des Rotors R angeordnet, wobei sich der Rotormagnet Mg des Rotors R zwischen beiden hindurch bewegt. Eine erste Statorspule S_{L} ist dabei auf einer Seite des Rotormagneten Mg und eine zweite Statorspule S_{R} auf der gegenüberliegenden anderen Seite des Rotormagneten Mg angeordnet, und zwar vorzugsweise mit jeweils gleichem Abstand zu diesem. Wenn in diesem Fall neben den tangentialen Antriebskräften auch Axialkräfte (d.h. Kraftkomponenten in einer Richtung senkrecht zur Rotationsebene des Rotors) und somit senkrecht zur radialen und tangentialen Richtung auf den Rotor R einwirken, so besteht die Gefahr, dass der Rotor bzw. Rotormagnet Mg die betreffende erste oder zweite Statorspule S_{L}, S_{R} (oder den jeweiligen Stator) berührt, und zwar insbesondere dann, wenn die Luftspalte zwischen beiden sehr klein sind.

Wie eingangs bereits erläutert wurde, ist es zur Lösung dieses Problems erforderlich, dass die in Figur 1(B) gezeigten beiden Statorspulen S_{L}, S_{R} elektrisch voneinander getrennt sind und somit unabhängig voneinander angesteuert werden können. Dieser Unterschied ist beispielhaft in Figur 2 angedeutet. Figur 2(A) zeigt einen herkömmlichen Motor M mit einer Statorspule S, die von einer elektronischen Steuereinheit ECU (Electronic Control Unit) zum Antrieb des Motors angesteuert wird, und zwar in Abhängigkeit von Positionsdaten hinsichtlich der momentanen Drehstellung des Rotormagneten Mg relativ zu der Statorspule S, die mittels eines Sensors an der Statorspule S oder sensorlos erfasst und der elektronischen Steuereinheit ECU zugeführt werden.

Figur 2(B) zeigt im Vergleich dazu einen erfindungsgemäßen Motor M, der eine erste und eine zweite Statorspule S_{L}, S_{R} aufweist, die gemäß Figur 1(B) angeordnet und elektrisch voneinander getrennt sind. Jede Statorspule S_{L}, S_{R} wird separat durch die elektronische Steuereinheit ECU_{LR} angesteuert, und zwar nicht nur wie in Figur 2(A) in Abhängigkeit von Positionsdaten hinsichtlich der momentanen Drehstellung der Rotormagnete Mg relativ zu den Statorspulen S_{L}, S_{R} und einer damit verbundenen gleichläufigen Veränderung der Abstände zwischen den Rotormagneten Mg einerseits und der ersten bzw. der zweiten Statorspule S_{L}, S_{R} andererseits, sondern auch in Abhängigkeit von einer durch die genannten Axialkräfte verursachten gegenläufigen Veränderung dieser beiden Abstände (Luftspaltbreiten).

Durch Messung der Veränderung der Breiten der beiden Luftspalte kann also eine Annäherung bzw. Entfernung der Rotormagnete an bzw. von den Statorspulen im Zuge der Drehbewegung von einer durch Axialkräfte verursachten axialen Verschiebung oder Verkippung des Rotors unterschieden werden, um diese dann durch entsprechend stärkere bzw. schwächere Bestromung der jeweiligen Statorspule zu kompensieren.

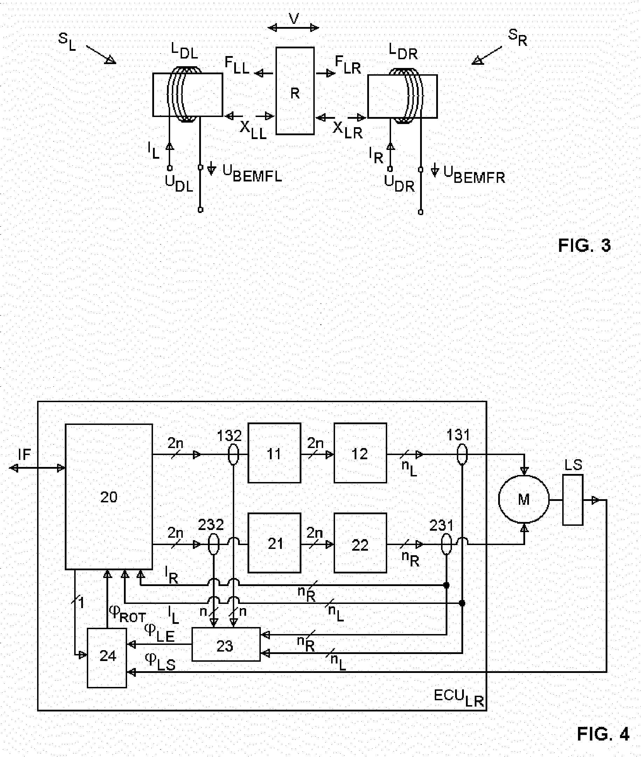

Figur 3 zeigt hierzu noch einmal im Detail eine linke Statorspule S_{L} mit Spulenkern und Spulenwicklung L_{DL} sowie eine rechte Statorspule S_{R} mit Spulenkern und Spulenwicklung L_{DR}, zwischen denen sich ein Rotor R hindurch bewegt. Zwischen dem Rotor R und der linken Statorspule S_{L} sowie dem Rotor R und der rechten Statorspule S_{R} wirken jeweils magnetische Kräfte F_{LL} bzw. F_{LR}, deren Größe von dem jeweiligen Spulenstrom I_{L} bzw. I_{R} durch die linke bzw. rechte Statorwicklung L_{DL} bzw. L_{DR} abhängig ist, so dass durch Veränderung dieser Bestromung auch die genannten Kräfte und somit die jeweilige Luftspaltbreite X_{LL}, X_{LR} zwischen beiden verändert werden kann. Umgekehrt kann eine Verkippung oder Verschiebung des Rotors R gemäß Pfeil V und eine damit verbundene gegenläufige Veränderung der Luftspaltbreiten X_{LL}, X_{LR} zum Beispiel anhand der entsprechend gegenläufigen Veränderung der beiden Gegen-EMKs U_{BEMFL}, U_{BEMFR} in den Spulenwicklungen L_{DL} bzw. L_{DR} oder durch Abstandssensoren erkannt werden. Durch entsprechende Veränderung der Bestromung der linken bzw. rechten Spulenwicklung L_{DL} bzw. L_{DR} kann der Verkippung oder Verschiebung des Rotors R entgegengewirkt werden, so dass die Breiten der beiden Luftspalte X_{LL}, X_{LR} zumindest im Wesentlichen unverändert gehalten werden können. Die jeweiligen Spulenströme I_{L}, I_{R} werden vorzugsweise durch Anlegen einer PWM-Spannung U_{DL} bzw. U_{DR} an die Spulenwicklungen L_{DL} bzw. L_{DR} in diese eingeprägt.

Figur 4 zeigt ein schematisches Blockschaltbild einer erfindungsgemäßen Steuereinheit ECU_{LR} für einen erfindungsgemäßen Elektromotor M gemäß Figur 2(B), der insbesondere ein bürstenloser und elektronisch zu kommutierender Motor ist.

Die Steuereinheit ECU_{LR} umfasst gemäß Figur 4 einen Controller 20, einen ersten und einen zweiten PWM-Generator 11, 21, eine erste und eine zweite Endstufe 12, 22 mit jeweils einer Treiber-Brückenschaltung und Versorgungsspannungsquelle, einen Rotorlage-Estimator 23, einen Phasenwinkelselektor 24, eine erste und eine zweite Strommesseinrichtung 131, 231 für einen tatsächlichen Strom durch die erste bzw. zweite Statorspule (Istwerte), sowie eine erste und eine zweite Spannungsmesseinrichtung 132, 232 am Eingang des ersten bzw. zweiten PWM-Generators 11, 21. Außerdem ist gemäß Figur 4 an dem Motor M ein Sensor LS zur Erfassung einer Drehstellung des Rotors bzw. Rotormagneten relativ zu dem Stator bzw. den Statorspulen ("Rotorlagesensor") angeordnet. Entsprechend der Anzahl n von Phasen des Motors M sind die Komponenten der Ansteuereinheit ECU_{LR} über die jeweils in Figur 4 angegebene Anzahl n bzw. 2n von Leitungen miteinander verbunden.

Der Controller 20 ist mit einem Interface- oder Bussystem IF verbunden, über das Daten hinsichtlich einer gewünschten Drehgeschwindigkeit, Beschleunigung, einem Drehmoment und einer Drehrichtung des Motors M usw. zugeführt werden.

Der Einfachheit halber sei angenommen, dass der Motor zwei Phasen, d.h. (nur) zwei Statorspulen aufweist (n=2). Das erfindungsgemäße Prinzip ist aber entsprechend auch auf Motoren mit mehr als zwei Phasen anwendbar.

Die beiden Endstufen 12, 22 weisen jeweils vorzugsweise eine Brückenschaltung aus Halbleiterschaltern sowie eine damit verbundene Versorgungsspannungsquelle auf, wobei jeweils eine Statorspule in den Brückenzweig geschaltet ist, um durch Öffnen und Schließen der Halbleiterschalter einen Spulenstrom mit vorgegebener Amplitude und Polarität in die betreffende Statorspule einzuprägen. Die Halbleiterschalter werden dabei vorzugsweise jeweils mittels einer PWM-Spannung geschaltet, so dass deren Tastverhältnis somit die Amplitude des in die Statorspule eingeprägten Stroms und die Phasenverschiebung zwischen den PWM-Spannungen die Polarität des Stroms bestimmt.

Die beiden PWM-Generatoren 11, 21 dienen zur Erzeugung dieser PWM-Spannungen, die den beiden Endstufen 12, 22 zugeführt werden.

Zu diesem Zweck erzeugt der Controller 20 in Abhängigkeit von über das Interface- oder Bussystem IF zugeführten Daten Spannungssignale für jede der beiden Statorspulen, die dem jeweiligen PWM-Generator 11, 21 zugeführt werden und aus denen die PWM-Generatoren jeweils die PWM-Spannungen für die Halbleiterschalter der Endstufen 12, 22 in der Weise erzeugen, dass in die beiden Statorspulen Spulenströme mit einer durch die Spannungssignale des Controllers 20 vorgegebener Amplitude und Polarität eingeprägt werden.

Zur zeitlich korrekten Kommutierung der Spulenströme ist eine Information über die momentane Drehstellung des Rotors relativ zu den Statorspulen bzw. deren beiderseitige Überdeckung erforderlich. Diese Information kann zum einen mittels des Rotorlagesensors LS gewonnen werden, dessen Ausgangssignal ϕ_{LS} den momentanen Winkel zwischen Rotor und Stator darstellt und dem Phasenwinkelselektor 24 zugeführt wird.

Zum anderen kann die Rotorlage auch sensorlos mittels des Rotorlage-Estimators 23 ermittelt werden, an dem zu diesem Zweck das Ausgangssignal der beiden Spannungsmesseinrichtungen 132, 232 für die von dem Controller 20 erzeugten Spannungssignale (die den PWM-Generatoren 11, 21 zur Erzeugung der Soll-Spulenströme zugeführt werden), sowie das Ausgangssignal der beiden Strommesseinrichtungen 131, 231 für die jeweiligen tatsächlichen (Ist-) Spulenströme anliegt. Der Rotorlage-Estimator 23 ermittelt anhand des Unterschiedes zwischen den Spannungs- und Stromsignalen die durch den Rotor in den beiden Statorspulen gegeninduzierte Spannung (Gegen-EMK) und daraus wiederum die tatsächliche momentane Winkellage bzw. Drehstellung des Rotors relativ zu den beiden Statorspulen.

Eine solche sensorlose Rotorlage-Bestimmung auf der Basis gemessener Ströme und Spannungen zusammen mit mathematischen Motormodellen ist Grundlage bekannter Verfahren zur sensorlosen Kommutierung, z.B. unter der Bezeichnung "Sensorlose feldorientierte Regelung" (FOC - field oriented control) oder "Vektorregelung", und zwar bei handelsüblichen BLDC- / PMSM- Motoren mit konstanter Luftspaltbreite, und wird zum Beispiel in R. Krishnan: "Permanent Magnet Synchronous and Brushless DC Motor Drives", insbesondere Chapter 8, CRC Press, 15.10.2009, beschrieben. Die vorliegende Erfindung nutzt bevorzugt diese mathematischen Modelle auch für die sensorlose Erfassung der gegenläufigen Veränderung der beiden Luftspaltbreiten infolge einer axialen Verschiebung oder Verkippung des Rotors.

Gemäß Figur 4 wird also das ermittelte, den momentanen Drehwinkel zwischen Rotor und Statorspulen darstellende Ausgangssignal ϕ_{LE} des Rotorlage-Estimators 23 ebenfalls dem Phasenwinkelselektor 24 zugeführt.

Mittels eines von dem Controller 20 erzeugten Schaltsignals kann dann durch den Anwender in Abhängigkeit von z.B. einer Motor-Drehgeschwindigkeit oder Beschleunigung oder einem anderen Betriebszustand des Motors der Phasenwinkelselektor 24 so geschaltet werden, dass entweder das von dem Rotorlagesensor LS erfasste Rotorlagesignal ϕ_{LS} oder das sensorlos mit dem Rotorlage-Estimator 23 ermittelte Rotorlagesignal ϕ_{LE} dem Controller 20 als auszuwertendes Rotorlagesignal ϕ_{ROT} zugeführt wird.

In Abhängigkeit von diesem Rotorlagesignal ϕ_{ROT} sowie dem ebenfalls dem Controller 20 zugeführten Ausgangssignal der Strommesseinrichtung 131, 231 (tatsächlicher Spulenstrom I_{LL}, I_{LR}) erzeugt der Controller 20 dann an seinem Ausgang die den PWM-Generatoren 11, 21 zugeführten Spannungssignale, die - wie oben erwähnt - mittels der PWM-Generatoren 11, 21 in PWM-Spannungen mit entsprechendem Tastverhältnis und entsprechender Polarität bzw. Phase umgesetzt werden, um damit mittels der Endstufen 12, 22 die Soll-Spulenströme mit entsprechender Amplitude und Polarität in die Statorspulen einzuprägen.

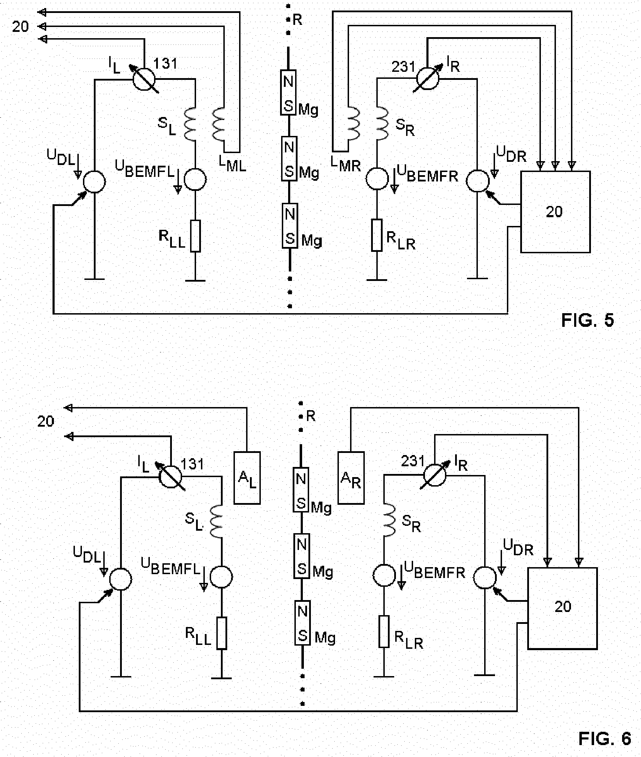

Weiterhin dient der Controller 20 dazu, eine Veränderung der beiden Breiten X_{LL}, X_{LR} der Luftspalte zwischen dem Rotormagneten Mg einerseits und den beiden Statorspulen S_{L}, S_{R} andererseits zu erfassen und durch entsprechende Erhöhung und/oder Verminderung der durch die Statorspulen getriebenen Stromkomponenten (d.h. Drehmomenterzeugende Komponente I_{Q}, magnetische Flusskomponente I_{D}) dieser Veränderung durch Ausübung der resultierenden magnetischen Kräfte auf den Rotor (bzw. dessen Rotormagnete) entgegenzuwirken. In den Figuren 5, 6 und 7 sind Beispiele für Schaltungsteile gezeigt, die jeweils zu diesem Zweck dienen und alternativ zusätzlich in dem in Figur 4 gezeigten Blockschaltbild realisiert sind. Sie sind nur aus Gründen der Übersichtlichkeit gesondert dargestellt.

In den Figuren 5, 6 und 7 ist jeweils der Controller 20, der Rotor R mit einer Anzahl von Rotormagneten Mg sowie die erste und die zweite Statorspule S_{L}, S_{R} schematisch dargestellt. Zwischen der ersten Statorspule S_{L} und dem Rotor R (bzw. den Rotormagneten Mg) besteht dabei ein erster Luftspalt, während zwischen der zweiten Statorspule S_{R} und dem Rotor R (bzw. dem Rotormagneten Mg) ein zweiter Luftspalt abgegrenzt wird.

Weiterhin ist die in jede Statorspule S_{L}, S_{R} gegeninduzierte Spannung in Form einer Spannungsquelle U_{BEMFL}, U_{BEMFR} dargestellt, die seriell zwischen die jeweilige Statorspule S_{L}, S_{R} und einen Massewiderstand R_{LL}, R_{LR} geschaltet ist.

Ferner ist in den Figuren 5, 6 und 7 die erste und die zweite Strommesseinrichtung 131, 231 sowie eine Spannungsquelle U_{DL}, U_{DR} gezeigt, die die an die Statorspulen S_{L}, S_{R} jeweils angelegte PWM-Spannung darstellen soll, mit der durch Steuerung durch den Controller 20 der momentane Soll-Spulenstromwert in die jeweilige Statorspule S_{L}, S_{R} eingeprägt wird. Dies geschieht, wie es oben mit Bezug auf Figur 4 erläutert wurde, mittels der PWM-Generatoren 11, 21 und der Endstufen 12, 22. Die mit den Strommesseinrichtungen 131, 231 gemessenen, tatsächlich durch die Statorspulen S_{L}, S_{R} fließenden Ströme I_{L}, I_{R} werden ebenfalls dem Controller 20 zugeführt.

Die Strommesseinrichtung 131, 231 sowie die Spannungsquelle U_{DL}, U_{DR} sind dabei jeweils in Reihe geschaltet, wobei diese Reihenschaltung parallel zu der Reihenschaltung aus der Statorspule S_{L}, S_{R}, der Spannungsquelle U_{BEMFL}, U_{BEMFR} und dem Massewiderstand R_{LL}, R_{LR} liegt.

Bei der ersten Ausführungsform gemäß Figur 5 ist an der ersten Statorspule S_{L} eine erste Sensorspule L_{ML} und an der zweiten Statorspule S_{R} eine zweite Sensorspule L_{MR} angeordnet, die beide mit dem Controller 20 verbunden sind.

Durch die Drehung des Rotors R im Betrieb des Motors wird durch die Rotormagnete Mg in den Sensorspulen L_{ML}, L_{MR} jeweils eine Spannung induziert. Sofern sich die Rotormagnete Mg mittig zwischen den beiden Sensorspulen L_{ML}, L_{MR} hindurch bewegen bzw. die Breite der beiden Luftspalte in zur Rotationsebene des Rotors R senkrechter Richtung konstant bleibt, ist die in den Sensorspulen L_{ML}, L_{MR} induzierte Spannung während der Annäherung und Entfernung der Rotormagnete Mg in Rotationsrichtung jeweils gleich groß.

Erst wenn zum Beispiel durch eine auf den Rotor R einwirkende Axialkraft der Rotor R zusätzlich zu der Drehbewegung eine Bewegungskomponente in einer Richtung senkrecht zur Rotationsebene ausführt, d.h. also zum Beispiel der erste Luftspalt kleiner wird, während sich gleichzeitig der zweite Luftspalt entsprechend vergrößert, so erhöht sich dadurch in der ersten Sensorspule L_{ML} die induzierte Spannung, während sie sich gleichzeitig in der zweiten Sensorspule L_{MR} vermindert. Diese gegenläufige Veränderung der in den Sensorspulen induzierten Spannungen wird durch den Controller 20 erkannt.

Zusätzlich zu der oben beschriebenen Ansteuerung bzw. Kommutierung der Statorspulen S_{L}, S_{R} zum Zwecke des Vortriebs des Rotors vermindert der Controller 20 dann die an die erste Statorspule S_{L} angelegte Spannung und/oder erhöht die an die zweite Statorspule S_{R} angelegte Spannung (wiederum mittels der PWM-Generatoren 11, 21 und der Endstufen 12, 22 wie oben erläutert), so dass sich auch die dadurch eingeprägten Statorspulenströme entsprechend vermindern bzw. erhöhen und durch die erste bzw. zweite Statorspule eine verminderte bzw. erhöhte magnetische Anziehungskraft auf den Rotor bzw. die Rotormagnete Mg ausgeübt wird, die der o.g. Axialkraft entgegenwirkt, diese im Wesentlichen kompensiert und verhindern kann, dass der Rotor bzw. die Rotormagnete Mg den Stator berühren.

Bei der zweiten Ausführungsform gemäß Figur 6 ist anstelle der Sensorspulen L_{ML}, L_{MR} jeweils ein Abstandssensor A_{L}, A_{R} vorgesehen, mit dem jeweils die Breite des ersten bzw. des zweiten Luftspaltes gemessen wird. Die gemessenen Werte werden dem Controller 20 zugeführt, der bei einer Veränderung der Breiten der Luftspalte wie oben erläutert die Statorspulen S_{L}, S_{R} mit erhöhten und/oder verminderten Stromwerten entsprechend ansteuert.

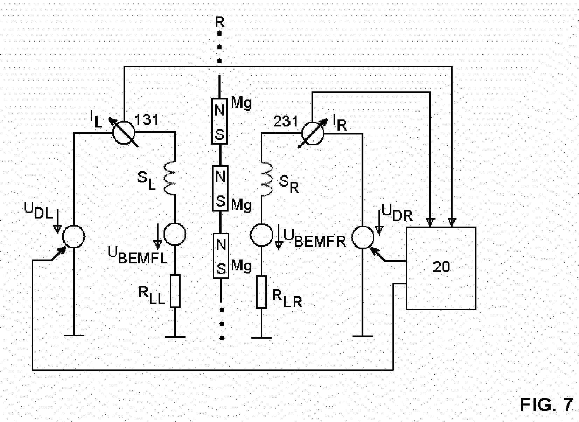

Figur 7 zeigt schließlich eine dritte Ausführungsform, bei der die Breiten der beiden Luftspalte sensorlos erfasst werden. Dies geschieht, wie es oben bereits im Zusammenhang mit Figur 4 erläutert wurde, durch Ermittlungen und Auswertungen der durch die Rotormagnete des Rotors in den Statorspulen gegeninduzierten Spannungen. Dabei führt eine Annäherung eines Rotors an die Statorspulen im Zuge der Drehbewegung des Rotors in beiden Statorspulen zu einer gleichen Erhöhung der gegeninduzierten Spannungen, während der Fall, in dem sich infolge einer Axialkraft z.B. die Breite des ersten Luftspaltes verkleinert und die Breite des zweiten Luftspaltes vergrößert, zu einer ungleichen Veränderung der gegeninduzierten Spannungen in beiden Statorspulen führt. Eine solche ungleiche Veränderung kann somit von dem Controller 20 von einer durch die Drehbewegung veränderten Gegen-EMK unterschieden werden, so dass ein Verkippen bzw. Verschieben des Rotors durch die genannten Axialkräfte durch entsprechend stärkere bzw. schwächere Bestromung der jeweiligen Statorspule kompensiert werden kann.

## Patentansprüche

1. Verfahren zur Ansteuerung eines Elektromotors, der einen Rotor sowie mindestens eine erste und eine zweite Statorspule aufweist, in die ein vorgegebener Spulenstrom zum Vortrieb des Rotors eingeprägt wird, wobei die beiden Statorspulen beiderseits der Rotationsebene des Rotors angeordnet und unabhängig voneinander elektrisch ansteuerbar sind, und wobei eine Bewegung oder Verkippung des Rotors in einer Richtung senkrecht zu dessen Rotationsebene, die zu einer Veränderung der Breite eines ersten Luftspaltes zwischen der ersten Statorspule und dem Rotor und einer Veränderung der Breite eines zweiten Luftspaltes zwischen der zweiten Statorspule und dem Rotor führt, erfasst und der vorgegebene, in die erste Statorspule einzuprägende Spulenstrom und/oder der vorgegebene, in die zweite Statorspule einzuprägende Spulenstrom so erhöht bzw. vermindert wird, dass die dadurch erhöhten bzw. verminderten magnetischen Kräfte zwischen dem Rotor und der ersten bzw. der zweiten Statorspule der Bewegung oder Verkippung des Rotors in der Richtung senkrecht zu dessen Rotationsebene entgegenwirken und diese zumindest im Wesentlichen kompensieren.

2. Verfahren nach Anspruch 1,
bei dem die Veränderung der Breite des ersten und des zweiten Luftspaltes mittels eines ersten und eines zweiten Abstandssensors erfasst wird.

3. Verfahren nach Anspruch 1,
bei dem die Veränderung der Breite des ersten und des zweiten Luftspaltes mittels einer ersten und einer zweiten, an der ersten bzw. der zweiten Statorspule angeordneten Sensorspule erfasst wird, in denen jeweils durch die Bewegung des Rotors Spannungen induziert werden.

4. Verfahren nach Anspruch 1,
bei dem die Veränderung der Breite des ersten und des zweiten Luftspaltes sensorlos durch Auswertung von in der ersten und der zweiten Statorspule durch den Rotor gegeninduzierten Spannungen erfasst wird.

5. Schaltungsanordnung zur Ansteuerung eines Elektromotors, der einen Rotor (R) sowie mindestens eine erste und eine zweite Statorspule (S_{L}, S_{R}) aufweist, in die ein vorgegebener Spulenstrom zum Vortrieb des Rotors (R) eingeprägt wird, wobei die beiden Statorspulen beiderseits der Rotationsebene des Rotors angeordnet und unabhängig voneinander elektrisch ansteuerbar sind, mit:
- einer ersten Einrichtung zur Erfassung einer Bewegung oder Verkippung des Rotors (R) in einer Richtung senkrecht zu dessen Rotationsebene, die zu einer Veränderung der Breite eines ersten Luftspaltes (X_{LL}) zwischen der ersten Statorspule (S_{L}) und dem Rotor (R) und einer Veränderung der Breite eines zweiten Luftspaltes (X_{LR}) zwischen der zweiten Statorspule (S_{R}) und dem Rotor (R) führt, sowie
- einer zweiten Einrichtung zur Erhöhung bzw. Verminderung des vorgegebenen, in die erste Statorspule (S_{L}) einzuprägenden Spulenstroms (I_{L}) und/oder des vorgegebenen, in die zweite Statorspule (S_{R}) einzuprägenden Spulenstroms (I_{R}) in Abhängigkeit von der erfassten Bewegung oder Verkippung des Rotors in der Richtung senkrecht zu dessen Rotationsebene in der Weise, dass die durch die Erhöhung und/oder Verminderung der vorgegebenen Spulenströme verursachten magnetischen Kräfte zwischen dem Rotor (R) und den Statorspulen (S_{L}, S_{R}) der Bewegung oder Verkippung des Rotors in der Richtung senkrecht zu dessen Rotationsebene entgegenwirken und diese zumindest im Wesentlichen kompensieren.

6. Schaltungsanordnung nach Anspruch 5,
bei der die erste Einrichtung zur Auswertung von durch Abstandssensoren (A_{L}, A_{R}) erzeugten Signale vorgesehen ist, mit denen eine Veränderung der Breite des ersten bzw. des zweiten Luftspaltes (X_{LL}, X_{LR}) erfasst wird.

7. Schaltungsanordnung nach Anspruch 5,
bei der die erste Einrichtung zur Auswertung von durch Sensorspulen (L_{ML}, L_{MR}) erzeugten Spannungen vorgesehen ist, die durch den Rotor durch eine Veränderung der Breite des ersten bzw. des zweiten Luftspaltes (X_{LL}, X_{LR}) in den Sensorspulen (L_{ML}, L_{MR}) induziert werden.

8. Schaltungsanordnung nach Anspruch 5,
bei der die erste Einrichtung zur Auswertung von in der ersten und der zweiten Statorspule (S_{L}, S_{R}) durch den Rotor (R) durch eine Veränderung der Breite des ersten bzw. des zweiten Luftspaltes (X_{LL}, X_{LR}) gegeninduzierten Spannungen vorgesehen ist.

9. Elektromotor, der einen Rotor (R) sowie mindestens eine erste und eine zweite Statorspule (S_{L}, S_{R}) aufweist, in die ein vorgegebener Spulenstrom zum Vortrieb des Rotors (R) eingeprägt wird, wobei die beiden Statorspulen (S_{L}, S_{R}) beiderseits der Rotationsebene des Rotors (R) angeordnet und unabhängig voneinander elektrisch ansteuerbar sind, so dass von beiden Seiten der Rotationsebene des Rotors (R) magnetische Kräfte senkrecht zu der Rotationsebene auf den Rotor (R) ausgeübt werden können, zur Ansteuerung mit einem Verfahren nach mindestens einem der Ansprüche 1 bis 4 und/oder in Kombination mit einer Schaltungsanordnung nach mindestens einem der Ansprüche 5 bis 8.

10. Elektromotor nach Anspruch 9,
bei dem die erste und die zweite Statorspule (S_{L}, S_{R}) entlang einer gemeinsamen geraden Linie angeordnet sind, die senkrecht zur Rotationsebene des Rotors (R) verläuft.

11. Elektromotor nach Anspruch 9,
mit einem ersten Abstandssensor (A_{L}) zur Erfassung der Breite eines ersten Luftspaltes (X_{LL}) zwischen der ersten Statorspule (S_{L}) und dem Rotor (R) sowie einem zweiten Abstandssensor (A_{R}) zur Erfassung der Breite eines zweiten Luftspaltes (X_{LR}) zwischen der zweiten Statorspule (S_{R}) und dem Rotor (R).

12. Elektromotor nach Anspruch 9,
mit einer ersten Sensorspule (L_{ML}), die auf einer Seite der Rotationsebene des Rotors (R) angeordnet ist, sowie einer zweiten Sensorspule (L_{MR}), die auf der gegenüberliegenden anderen Seite der Rotationsebene des Rotors (R) angeordnet ist, wobei die Sensorspulen zur Erfassung von aufgrund einer Veränderung der Breite des ersten bzw. des zweiten Luftspaltes (X_{LL}, X_{LR}) durch den Rotor (R) in diesen induzierten Spannungen vorgesehen sind.

13. Elektromotor nach Anspruch 9,
zum Antrieb eines Elektrofahrrades, bei dem der Rotor (R) durch ein mit einer Mehrzahl von Permanentmagneten besetztes Laufrad des Fahrrades gebildet ist.

14. Elektrofahrrad mit einem Elektromotor nach Anspruch 13 und einer Schaltungsanordnung nach mindestens einem der Ansprüche 5 bis 8 zur Ansteuerung des Elektromotors.
